# EUROPÄISCHE PATENTSCHRIFT

(11) **EP 1 500 572 B1**
(45) Veröffentlichungstag und Bekanntmachung des Hinweises auf die Patenterteilung: **02.05.2007**
(21) Anmeldenummer: 04016198.6
(22) Anmeldetag: 09.07.2004
(51) Int. Cl.: B62D 5/04, F16H 25/22

(54) **Lenkmutter sowie Kugelgewindetrieb und damit ausgestattete Kraftfahrzeug-Lenkung**
Steering nut as well as ball screw and vehicle steering provided with the same
Ecrou pour système de direction ainsi que vis d'entrainement a billes et véhicule equipe de cette ensemble

(30) Priorität: 25.07.2003 DE 10333909
(43) Veröffentlichungstag der Anmeldung: 26.01.2005
(73) Patentinhaber: ZF Lenksysteme GmbH, 73527 Schwäbisch Gmünd (DE)
(72) Erfinder: Budaker, Martin, 73540 Heubach (DE); Knödler, Helmut, 73547 Lorch (DE); Richter, Peter, 71404 Korb (DE)

(56) Entgegenhaltungen:
- DE-A1- 1 908 103
- DE-A1- 10 012 231
- DE-A1- 19 936 837
- US-A- 5 241 874

## Beschreibung

Die Erfindung betrifft eine Lenkmutter für einen Kugelgewindetrieb nach dem Oberbegriff des Patentanspruches 1. Außerdem betrifft die Erfindung einen solchen Kugelgewindetrieb und eine damit ausgestattete Kraftfahrzeug-Lenkung, insbesondere eine Elektrolenkung.

In Kraftfahrzeug-Lenkungen, in denen größere Lenkkräfte auftreten können, wird die Servounterstützung bevorzugt direkt an der Schubstange eingeleitet. Dazu eignen sich im Besonderen Kugelgewindetriebe. Weit verbreitet sind hydraulisch unterstützte Lenkung. Im zunehmenden Maße kommen auch elektrisch unterstützte Lenkungen, sogenannte Elektrolenkungen, zum Einsatz. Dort wird eine Servounterstützung durch einen Elektromotor bewerkstelligt. Dabei kann es sich um eine Hilfskraft oder um eine Fremdkraft handeln. Je nach Ausführungsform der Lenkung kann die Servounterstützung an verschiedenen Stellen und durch verschiedene Anordnungen zur Verfügung gestellt werden. Bei Elektrolenkungen kommen üblicherweise Zahnstangen zum Einsatz,. Für größere Servounterstützungen werden bevorzugt Kugelgewindetriebe verwendet, bei denen über eine sogenannte Lenkmutter das vom Elektromotor erzeugte Drehmoment umgesetzt wird in eine auf die Schubstange wirkende Kraft. Diese Art der Servolenkung kann bei allen Lenkungsystemen, insbesondere bei Vorderachs-Lenksystemen, so auch bei steer-by-wire-Lenksystemen, verwendet werden, wie auch bei Hinterachs-Lenksystemenn. Um den Einbau, insbesondere den Einbau von PKW-Vorderachs-Lenkungen, zu optimieren und möglichst kompakt zu gestalten (sog. "Packaging") wird der Elektromotor parallel und in unmittelbarer Nähe zur Schubstange angeordnet. Diese Konstruktion wird auch als achsparallele Anordnung, kurz APA genannt, bezeichnet. Es ist auch bekannt, den Elektromotor so zu konstruieren, das die Lenkmutter direkt mit dem Läufer verbunden ist, wobei der der Stator die Schubstange ganz umschließt.

Aus der DE 10032120A1 ist u.a. eine Lenkung der eingangs genannten Art bekannt. Dort wird eine Ausführung beschrieben, die ein Schraubengetriebe mit einem Kugelumlaufmechanismus aufweist, der eine geräusch- und verschleissarme Lenkfunktion bei gleichzeitigem hohen Wirkungsgrad gewährleistet. In die Kugelumlaufgewindemutter, auch kurz Lenkmutter genannt, ist ein Sensor integriert, der die axial Verschiebung erfaßt. Die weitere konstruktive die Ausgestaltung der Lenkmutter, insbesondere die Art der Kugelrückführung, wird dort nicht näher beschrieben.

Allgemein bekannt sind zwei verschiedene Arten der Kugelrückführung, nämlich die Rückführung mittels Kugelumlaufrohren oder mittels Kugelumlenkteilen.

Beispielsweise ist in der EP0133003B1 (siehe dort Spalte 4, Zeilen 37-49 und Fig. 3) der erste Fall beschrieben, bei der die Rückführung in der Lenkmutter ("ball nut 30") mittels zweier Kugelumlaufrohre ("ball circulation paths 30a and 30b") erfolgt. Diese Konstruktion benötigt viel radialen Bauraum und hat den weiteren Nachteil, dass mindestens 1,5 kugelgefüllte Gewindegänge erforderlich sind, wodurch der Kugeldurchmesser sehr klein dimensioniert werden muss, nämlich kleiner als die Gewindesteigung dimensioniert werden muss. Außerdem kann es zu unerwünschten Geräuschen kommen, da im Bereich eines jeden Umlaufrohres Spiel für die Kugeln vorgesehen werden muss.

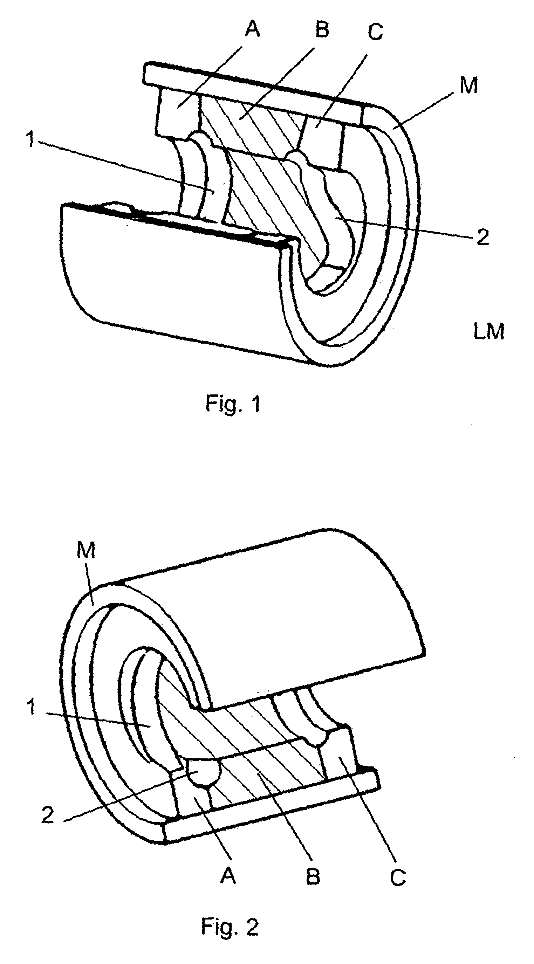

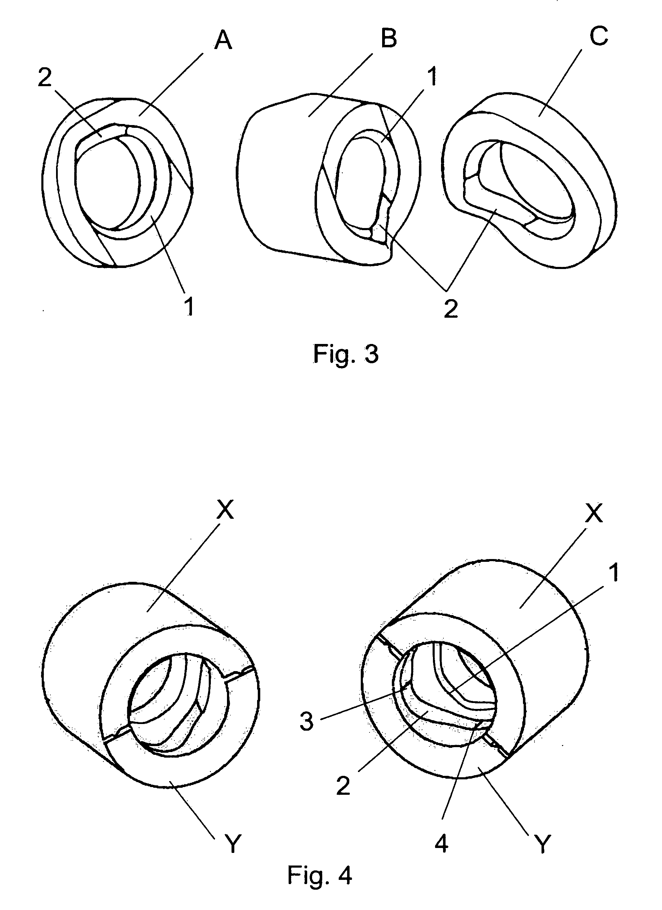

Eine Kugelrückführung mittels Kugelumlenkteilen ist beispielsweise aus der gattungsgemäßen DE19936837C2 bekannt. Wie dort etwa in Spalte 4, Abschnitt [0040] anhand der Fig. 1 beschrieben wird, erfolgt die Rückführung der Kugeln mittels eines sogenannten "Umsetzbereichs 3", der in die Lenkmutter eingearbeitet ist. Demnach muss der Kopfkreisdurchmesser der Schnecke ("Spindel 20" in der Fig. 13) in etwa dem Teilkreisdurchmesser des Gewindes entsprechen. Dieses Durchmesserverhältnis bedingt, dass die Kugeln einen großen radialen Hub machen müssen, damit sie in den Umlenkteilen ("Umsetzbereichen 3") über den Kopfkreisdurchmesser der Schnecke hinweg zurückgeführt werden können. Das erzeugt jedoch hohe Geräusche, die beim Einsatz in Lenkungen nicht geduldet werden können. Im besonderen verstärkt sich dieses Problem, wenn man die Lenkmutter in mehrere Module so aufteilt, wie es in der DE19936837C2 vorgeschlagen wird. Dort (siehe etwa Spalte 4, Zeilen 55-58 anhand der Fig. 3) wird nämlich für jede Kugelumlaufbahn ein Umsetzbereich ("Bereich 3") vorgesehen, wodurch pro Modul eine eigene Kugelrückführung vorgesehen ist, was wiederum als eigene geräuscherzeugende Komponente angesehen werden muss. Aufgrund des mehrmoduligen Zusammenbaus der Lenkmutter (siehe dort Fig. 13) ergibt sich somit eine Akkumulierung des Geräuschproblems.

Aufgabe der Erfindung ist es, eine Lenkmutter der eingangs genannten Art und einen Kugelgewindetrieb für eine Lenkung, insbesondere für eine Elektrolenkung, vorzuschlagen, bei der nur eine möglichst geringe Geräuschentwicklung auftritt. Außerdem soll die vorgeschlagene konstruktive Gestaltung der Lenkmutter es ermöglichen, dass der Kugeldurchmesser gleich oder größer sein darf als die Gewindesteigung.

Die Aufgabe wird gelöst durch eine Lenkmutter mit den Merkmalen des Anspruchs 1 sowie durch einen Kugelgewindetrieb und eine damit ausgestattete Lenkung mit den Merkmalen des nebengeordneten Anspruchs.

Demnach wird vorgeschlagen, die Lenkmutter in mehrere aneinander fügbare Teilstücke zu unterteilen und eine rohrförmige Ummantelung vorzusehen, die die Teilstücke vollständig umschließt, wobei in den Teilstücken Vertiefungen für Kugelrückführungen so vorgesehen sind, dass im zusammengefügten Zustand der Teilstücke die Lenkmutter zwei Kugelrückführungen aufweist, die sich jeweils an einem axialen Ende der Lenkmutter befinden und in radialer Richtung gegeneinander versetzt angeordnet sind.

Das hat den Vorteil, dass aufgrund der Modulbauweise (Teilstücke und Ummantelung) eine einfach zu fertigende Lenkmutter geschaffen wird, deren Kugelrückführungen in Umfangsrichtung der Ummantelung versetzt zueinander positioniert sind, was zu einem ausgeglichenen und damit ruhigen Kugelumlauf führt. Die Kugelrückführungen können sehr kurz gestaltet werden, so dass sich möglichst wenige Kugeln im Rücklauf befinden, was zu einer weiteren Reduzierung der Laufgeräusche führt. Dadurch wird ein sehr geräuscharmes Kugelumlaufgetriebe geschaffen, bei dem vorzugsweise die Lenkmutter unabhängig von der Anzahl der verwendeten Teilstücke nur genau zwei solcher Kugelrückführungen aufweist.

Vorteilhafte und zweckmäßige Ausgestaltungen der Erfindung sind in den Unteransprüchen angegeben.

Nachfolgend sind anhand der Figuren verschiedene Ausführungsbeispiele der vorliegenden Erfindung prinzipgemäß beschrieben. Es zeigen:
Fig. 1 eine erfindungsgemäße erste Lenkmutter für ein Kugelgewindetrieb,
Fig. 2 die erste Lenkmutter in einer anderen Ansicht,
Fig. 3 Teilstücke der ersten Lenkmutter (radiale Teilung)
Fig. 4 Teilstücke einer zweiten Lenkmutter (axiale Teilung)

Die Figur 1 zeigt als erstes Ausführungsbeispiel eine erste Lenkmutter LM für ein Kugelgewindetrieb einer Lenkung. Der übrige Aufbau der Lenkung ist an sich bekannt und wird hier nicht näher dargestellt.

Zur Unterstützung der Handlenkkraft wir mit Hilfe des Kugelgewindetriebs eine von einem Servomotor, vorzugsweise einem Elektromotor, erzeugte Rotationskraft (Drehmoment) umgesetzt in eine Translationskraft (Schubraft), welche kraftunterstützend auf die Schubstange der Lenkung wirkt.

Die Übertragung des vom dem Elektromotor erzeugten Drehmoments auf den Kugelgewindetrieb erfolgt vorzugsweise über ein Stirnradgetriebe oder auch über ein Zahnriementrieb, die beide besonders für den platzsparenden APA-Einbau geeignet. Es ist aber auch denkbar ein Schneckenradgetriebe zu verwenden, das formschlüssig mit der Lenkmutter verbunden ist und das mit einer Schnecke kämmt, die auf der Antriebswelle des Elektromotor sitzt oder zumindest damit verbunden ist.

Die Steuerung des Elektromotors erfolgt u.a. in Abhängigkeit von dem am Lenkhandrad aufgebrachten Lenkmoment. Auch kann es sinnvoll sein, die momentane Fahrgeschwindigtkeit des Kraftfahrzeuges zu erfassen und ebenfalls davon abhängig die vom Elektromotor aufgebrachte Servounterstützung zu steuern.

Für eine möglichst geräuscharme Lenkung wird hier vorgeschlagen, ein Kugelgewindetrieb mit einer erfindungsgemäß konstruierten Lenkmutter einzusetzen, die, wie Fig. 1 beispielhaft zeigt, aus einer Anzahl mehrerer aneinander fügbare Teilstücke A, B und C aufgebaut ist, welche von einer rohrförmigen Ummantelung M vollständig umschlossen werden. Im zusammengebauten Zustand umfasst die Lenkmutter LM vorzugsweise genau zwei Kugelumläufe 1. Für die beiden Kugelumläufe 1 wie auch für die zugeordneten zwei Kugelrückführungen 2 sind Vertiefungen in den Teilstücken A, B und C so vorgesehen sind, dass im zusammengefügten Zustand der Teilstücke sich jeweils eine der beiden Kugelrückführungen 2 an einem axialen Ende der Lenkmutter LM befindet, wobei die Kugelrückführungen 2 in radialer Richtung gegeneinander versetzt angeordnet sind, vorzugsweise um 180° versetzt angeordnet sind. Dieser vorteilhafte modulare Aufbau wird auch in der Zusammenschau der Figuren 1 und 2 deutlich.

Die Konstruktion der Teilstücke selbst wird nun noch genauer anhand der Fig. 3 dargestellt:

Dort ist zu sehen, dass die Lenkmutter vorzugsweise aus mehreren verschieden geformten Teilstücken modular zusammengesetzt werden kann. In diesem ersten Ausführungsbeispiel ist die Lenkmutter radial geteilt, nämlich in ein linkes äußeres Teilstück A, ein mittleres Teilstück B und ein rechtes äußeres Teilstück C. Die Teilstücke A und C werden im weiteren auch Endstücke genannt. Das mittlere Teilstück B wird auch kurz Mittelstück genannt. Durch die lineare Bewegung der Lenkmutter entlang der Schubstange ergibt es sich, dass die Berührungspunkte der Kugeln mit dem Gewinde unterschiedlich stark belastet werden. Es wurde festgestellt, dass bei einer Rechtsbewegung die linken Berührungspunkte und bei einer Rechtsbewegung die linken Berührungspunkte stärker belastet werden. Bei Betrachtung der Schnittstellen zwischen Mittelstück B und den Endstücken A oder C wurde festgestellt, dass unabhängig von der Bewegung der Lenkmutter sich die stärker belasteten Berührungspunkte auf der inneren Seite, also auf der Seite des Mittelstücks B befinden. Demnach nimmt das mittlere Teilstück B (Mittelstück) im wesentlichen die im Gewinde auftretenden Kräfte auf. Das gilt besonders dann, wenn das Mittelstück wesentlich länger ausgebildet ist als die Endstücke. Daher ist es vorteilhaft, wenn das Mittelstück B aus einem belastbareren Material als die beiden äußeren Teilstücke (Endstücke) A und C besteht. Beispielsweise ist das Mittelstück B aus einem Einsatzstahl, wie z.B. 16MnCr5, gefertigt, wo hingegen die Endstücke A und C aus einem Leichtmetall, z.B. Aluminium, besteht. Die Endstücke können sogar aus Kunststoff, vorzugsweise in Spritzguß, gefertigt sein. Damit wird eine sehr kostengünstige Anordnung geschaffen. Die Aufteilung der Teilstücke erfolgt entlang der Vertiefungen für den Kugelumlauf 1 und für die Kugelrückführung 2. Demnach werden die Vertiefungen jeweils hälftig von zwei zueinander benachbarten Teilstücken, z.B. von A und B, gebildet.

Zur Formgebung der Vertiefung muss deshalb das jeweilige Werkstück, also der Rohling für z.B. das Mittelstück B, nur von der Seite her bearbeitet werden. Es werden dort im wesentlichen Vertiefungshälften ausgeformt, vorzugsweise spanlos, etwa durch Kaltumformen. Dasselbe gilt auch im Falle von gegossenen Teilstücken, wie etwa für die Endstücke, die im Aluminium-Druckguss hergestellt werden können. Auch ist denkbar die Endstücke als Kunststoffteile, insbesondere Spritzgussteile, herzustellen.

Aufgrund der Konstruktion können also durch solche effizienten und kostengünstigen Herstellungsverfahren die Teilstücke für die Lenkmutter gefertigt werden, wobei der Kugelumlaufbereich wie auch der Kugelrückführungsbereich exakt ausgeformt werden können. Bei der hier vorgeschlagenen modularen Konstruktion (siehe auch Fig. 3 oder Fig. 4) müssen keine Einlegeteile oder ähnliche Zusatzelemente verwendet werden. Somit entstehen zwischen den Kugelumlauf- und Kugelrückführungsbereichen störungsfreie Übergänge 3 und 4 ohne Kanten oder Absätze.

In der Fig. 4 ist ein zweites Ausführungsbeispiel gezeigt, bei dem die Lenkmutter axial geteilt ist in zwei Teilstücke X und Y. Im Zusammenbau ergibt sich eine Lenkmutter mit zwei Kugelumläufen 1, wobei jedes Teilstück genau einen der benötigten Kugelrückführungen enthält. Damit wird eine axial-symmetrische Konstruktion geschaffen, bei der beide Teilstücke identisch ausgebildet sein können. Das erspart erheblich den Aufwand für die Herstellung, weil für beide Teilstücke X und Y derselbe Prozess durchlaufen wird. Die Lenkmutter besteht also im wesentlichen aus zwei identischen Lenkmutter-Hälften.

Nach der Herstellung der beiden Lenkmutter-Häften (Teilstücke X und Y) werden diese vorzugsweise fest miteinander verbunden, etwa durch Kondensator-Entladungs-Schweißen, und anschließend in die rohrförmige Ummantelung (vergl. M in Fig. 1) eingefasst. Da die Hälften durch Kaltformen gebildet wurden, braucht nur noch der eigentliche Gewindegang für die Kugelrückführung 2 von seinem Anfang bis zu seinem Ende geschliffen zu werden, falls dies gewünscht sein sollte. Diese Art der Bearbeitung betrifft also nur einen begrenzten Bereich, der deutlich kleiner als der Umfang (360°) ist und deshalb sehr kostengünstig durchgeführt werden kann. Dasselbe gilt auch für die Konstruktionen nach Fig. 1-3. Bei herkömmlichen Lenkmuttern muss hingegen auf den gesamten Umfang hin und entlang der Lenkmutter-Länge geschliffen werden.

Bei der hier vorgeschlagenen modular aufgebauten Lenkmutter ist auch die Dimensionierung der Kugellaufbahn 10 verbessert.

Üblicherweise ist die Dimensionierung der Kugellaufbahn für die Kugeln so ausgelegt, dass der Druckwinkel α etwa 45° beträgt, was zur Folge hat, dass das Maß X für die Vertiefung der Kugelbahn annähernd so groß ist wie der Kugelradius, also wie der halbe Kugeldurchmesser d. Das bedeutet, dass X = d/2 ist. Daraus folgt wiederum, dass der Abstand h zwischen den Kugellaufbahnen muss größer sein muss als der Kugeldurchmesser d. Üblicherweise gilt also: h>d.

Hingegen ist die hier vorgeschlagene Dimensionierung der Kugellaufbahn 10 ist so ausgelegt, dass der Druckwinkel kleiner ist (α < 45°), vorzugsweise etwa 30° beträgt. Dass führt dazu, dass auch die Vertiefung X gering ausgeprägt sein kann, wodurch wiederum die Kugeln 9 bei der Rückführung nur noch eine geringe Hubbewegung ausführen müssen. Außerdem kann aufgrund der vorgeschlagenen Dimensionierung die Gewindegeometrie so gestaltet werden, dass der Kugeldurchmesser d größer ist als die Gewindesteigung h, dass also gilt: d > h. Damit können sehr kurze Kugelrückführungen ausgebildet werden, so dass sich bei der Kugelrückführung auch nur eine sehr geringe Auslenkung der Kugelkette in axialer Richtung ergibt. Diese sehr geringe axiale Auslenkung sowie die geringe Hubbewegung der Kugeln 9 als auch die in vollständig in den Teilstücken der Lenkmutter integrierte Kugelrückführung (siehe 2 in Fig. 4) bewirken im Betrieb eine deutliche Reduzierung der Laufgeräusche.

Aufstellung der verwendeten Bezugszeichen
- LM: Lenkmutter
- M: Ummantelung
- A, C: aüßeres Teilstück (links, rechts)
- M: inneres Teilstück (Mitte)
- X, Y: Teilstück (oben, unten)
- 1: Kugelumlauf
- 2: Kugelrückführung
- 3, 4: Übergangsbereich (erster, zweiter)
- 9: Kugel
- 10: Kugelbahn

## Patentansprüche

1. Lenkmutter (LM) für einen Kugelgewindetrieb, der eine Gewindespindel aufweist, in die die Lenkmutter (LM) über Kugeln (9) eingreift, wobei die Lenkmutter (LM) mehrere Kugelumläufe (1) umfasst und in eine Anzahl mehrerer aneinander fügbare Teilstücke (A, B, C) unterteilt ist,
**dadurch gekennzeichnet, dass**
die Kugelmutter (LM) eine rohrförmige Ummantelung (M) aufweist, die die Teilstücke (A, B, C) vollständig umschließt, und dass in den Teilstücken (A, B, C) Vertiefungen für Kugelrückführungen (2) so vorgesehen sind, dass im zusammengefügten Zustand der Teilstücke (A, B, C) die Lenkmutter (LM) zwei Kugelrückführungen (2) aufweist, die sich jeweils an einem axialen Ende der Lenkmutter (LM) befinden und in radialer Richtung gegeneinander versetzt angeordnet sind.

2. Lenkmutter (LM) nach Anspruch 1, **dadurch gekennzeichnet, dass**
die zwei Kugelrückführungen (2) in radialer Richtung gegeneinander um 180° versetzt angeordnet sind.

3. Lenkmutter (LM) nach Anspruch 2, **dadurch gekennzeichnet, dass**
die Kugelmutter (LM) mehrere Kugelumläufe (1) umfasst, dass die Teilstücke (A, B, C) ringförmig ausgebildet sind und eine radiale Teilung der Kugelmutter (LM) darstellen, und dass jede der zwei Kugelrückführungen (2) aus zwei zueinander benachbarten und zusammen gefügten Teilstücken (A, B) gebildet ist.

4. Lenkmutter (LM) nach Anspruch 3, **dadurch gekennzeichnet, dass**
die Kugelmutter (LM) drei ringförmig ausgebildete Teilstücke (A, B, C) umfasst, von denen zwei die äußeren kleineren Teilstücke (A, C) der Lenkmutter (LM) bilden und das dritte Teilstück (B) das mittlere größere Teilstück (M) bildet, welches zusammen mit den benachbarten äußeren Teilstücken (A, C) zumindest zwei Kugelumläufe (1) umfasst, die jeweils eine der zwei Kugelrückführungen (2) enthalten.

5. Lenkmutter (LM) nach Anspruch 4, **dadurch gekennzeichnet, dass**
das mittlere Teilstück (B) aus einem ersten Werkstoff gefertigt ist, der mechanisch belastbarer ist als ein zweiter Werkstoff, und dass die äußeren Teilstücke (A, C) aus dem zweiten Werkstoff gefertigt sind.

6. Lenkmutter (LM) nach Anspruch 5, **dadurch gekennzeichnet, dass**
der erste Werkstoff aus Metall, insbesondere aus Stahl oder Gußmaterial, gefertigt ist, und dass der zweite Werkstoff aus Leichtmetall oder Kunststoff gefertigt ist.

7. Lenkmutter (LM) nach einem der vorhergehenden Ansprüche, **dadurch gekennzeichnet, dass** die Ummantelung ein Rohr, insbesondere ein Metallrohr (M), ist.

8. Lenkmutter nach Anspruch 1, **dadurch gekennzeichnet, dass** die Lenkmutter axial geteilt ist in zwei bogenförmige Teilstücke (X, Y), die die rohrförmige Ummantelung vollständig umschließt, wobei jedes (Y) der Teilstücke genau eine der beiden Kugelrückführungen (2) aufweist, so dass die Kugelrückführungen (2) in radialer Richtung in axialer Ebene gegeneinander versetzt, insbesondere gegeneinander um 180° versetzt, angeordnet sind.

9. Kugelgewindetrieb, der eine Schneckenspindel aufweist, in die eine Lenkmutter (LM) über Kugeln (9) eingreift, wobei die Lenkmutter (LM) mehrere Kugelumläufe (1) umfasst und in mehrere aneinanderfügbare Teilstücke (A, B, C) unterteilt ist,
**dadurch gekennzeichnet, dass**
die Kugelmutter (LM) eine rohrförmige Ummantelung (M) aufweist, die die Teilstücke (A, B, C) vollständig umschließt, und dass in den Teilstücken (A, B, C) Vertiefungen für Kugelrückführungen (2) so vorgesehen sind, dass im zusammengefügten Zustand der Teilstücke (A, B, C) die Lenkmutter (LM) zwei Kugelrückführungen (2) aufweist, die sich jeweils an einem axialen Ende der Lenkmutter (LM) befinden und in radialer Richtung gegeneinander versetzt angeordnet sind.

10. Kraftfahrzeug-Lenkung mit einer Lenkmutter (LM) für einen Kugelgewindetrieb, der eine Schneckenspindel aufweist, in die die Lenkmutter (LM) über Kugeln (9) eingreift, wobei die Lenkmutter (LM) mehrere Kugelumläufe (1) umfasst und in mehrere aneinander fügbare Teilstücke (A, B, C) unterteilt ist,
**dadurch gekennzeichnet, dass**
die Kugelmutter (LM) eine rohrförmige Ummantelung (M) aufweist, die die Teilstücke (A, B, C) vollständig umschließt, und dass in den Teilstücken (A, B, C) Vertiefungen für Kugelrückführungen (2) so vorgesehen sind, dass im zusammengefügten Zustand der Teilstücke (A, B, C) die Lenkmutter (LM) zwei Kugelrückführungen (2) aufweist, die sich jeweils an einem axialen Ende der Lenkmutter (LM) befinden und in radialer Richtung gegeneinander versetzt angeordnet sind.

## Claims

1. Steering nut (LM) for a ball screw comprising a threaded spindle, with which the steering nut (LM) engages by means of balls (9), the steering nut (LM) comprising a plurality of ball circulation paths (1) and being subdivided into a number of portions (A, B, C) capable of being fitted together,
**characterized in that**
the ball nut (LM) comprises a tubular jacket (M), which completely encloses the portions (A, B, C), and **in that** indentations for ball returns (2) are provided in the portions (A, B, C) in such a way that, when the portions (A, B, C) have been fitted together, the steering nut (LM) comprises two ball returns (2), which are located in each case at one axial end of the steering nut (LM) and are offset radially relative to one another.

2. Steering nut (LM) according to Claim 1, **characterized in that** the two ball returns (2) are offset radially by 180° relative to one another.

3. Steering nut (LM) according to Claim 2, **characterized in that** the ball nut (LM) comprises a plurality of ball circulation paths (1), **in that** the portions (A, B, C) are of annular construction and divide the ball nut (LM) radially, and **in that** each of the two ball returns (2) is formed from two mutually adjacent, fitted-together portions (A, B).

4. Steering nut (LM) according to Claim 3, **characterized in that** the ball nut (LM) comprises three portions (A, B, C) of annular construction, two thereof forming the outer, smaller portions (A, C) of the steering nut (LM) and the third portion (B) forming the middle, larger portion (M), which, together with the adjacent, outer portions (A, C), comprises at least two ball circulation paths (1), which each contain one of the two ball returns (2).

5. Steering nut (LM) according to Claim 4, **characterized in that** the middle portion (B) is made from a first material, which is capable of bearing a greater mechanical load than a second material, and **in that** the outer portions (A, C) are made from the second material.

6. Steering nut (LM) according to Claim 5, **characterized in that** the first material is made of metal, in particular steel or cast material, and **in that** the second material is made of light metal or plastics material.

7. Steering nut (LM) according to one of the preceding claims, **characterized in that** the jacket is a tube, in particular a metal tube (M).

8. Steering nut according to Claim 1, **characterized in that** the steering nut is divided axially into two arcuate portions (X,Y), which are completely enclosed by the tubular jacket, each one (Y) of the portions comprising precisely one of the two ball returns (2), such that the ball returns (2) are offset radially relative to one another in an axial plane, in particular are offset by 180° relative to one another.

9. Ball screw comprising a worm spindle, with which a steering nut (LM) engages by means of balls (9), the steering nut (LM) comprising a plurality of ball circulation paths (1) and being subdivided into a plurality of portions (A, B, C) capable of being fitted together,
**characterized in that**
the ball nut (LM) comprises a tubular jacket (M), which completely encloses the portions (A, B, C), and **in that** indentations for ball returns (2) are provided in the portions (A, B, C) in such a way that, when the portions (A, B, C) have been fitted together, the steering nut (LM) comprises two ball returns (2), which are located in each case at one axial end of the steering nut (LM) and are offset radially relative to one another.

10. Motor vehicle steering gear with a steering nut (LM) for a ball screw comprising a worm spindle, with which the steering nut (LM) engages by means of balls (9), the steering nut (LM) comprising a plurality of ball circulation paths (1) and being subdivided into a plurality of portions (A, B, C) capable of being fitted together,
**characterized in that**
the ball nut (LM) comprises a tubular jacket (M), which completely encloses the portions (A, B, C), and **in that** indentations for ball returns (2) are provided in the portions (A, B, C) in such a way that, when the portions (A, B, C) have been fitted together, the steering nut (LM) comprises two ball returns (2), which are located in each case at one axial end of the steering nut (LM) and are offset radially relative to one another.

## Revendications

1. Ecrou pour système de direction (LM) d'une vis d'entraînement à billes, laquelle présente un arbre à vis, dans lequel l'écrou pour système de direction (LM) s'engrène par l'intermédiaire des billes (9), moyennant quoi l'écrou pour système de direction (LM) comprend plusieurs douilles à billes (1) et est divisé en un certain nombre de pièces partielles (A, B, C) assemblables les unes aux autres,
**caractérisé en ce que**
l'écrou pour système de direction (LM) présente une enveloppe (M) en forme de tube, qui renferme complètement les pièces partielles (A , B, C) et **en ce que** des cavités pour des recirculations de billes (2) sont prévues dans les pièces partielles (A, B, C), de telle sorte que, à l'état assemblé des pièces partielles (A, B, C), l'écrou pour système de direction (LM) présente deux recirculations de billes (2), qui se trouvent respectivement à une extrémité axiale de l'écrou pour système de direction (LM) et sont disposées en décalage l'une contre l'autre dans la direction radiale.

2. Ecrou pour système de direction (LM) selon la revendication 1, **caractérisé en ce que** les deux recirculations de billes (2) sont disposées en décalage de 180° l'une contre l'autre dans la direction radiale.

3. Ecrou pour système de direction (LM) selon la revendication 2, **caractérisé en ce que** l'écrou pour système de direction (LM) comprend plusieurs douilles à billes (1), **en ce que** les pièces partielles (A, B, C) ont une configuration annulaire et représentent une division radiale de l'écrou pour système de direction (LM) et **en ce que** chacune des deux recirculations de billes (2) est formée par deux pièces partielles (A, B) disposées à proximité l'une de l'autre et assemblées.

4. Ecrou pour système de direction (LM) selon la revendication 3, **caractérisé en ce que** l'écrou pour système de direction (LM) comprend trois pièces partielles à configuration annulaire (A, B, C), dont deux forment les plus petites pièces partielles extérieures (A, C) de l'écrou pour système de direction (LM) et la troisième pièce partielle (B) forme la plus grande pièce partielle centrale (M), laquelle conjointement avec les pièces partielles extérieures voisines (A, C) forme au moins deux douilles à billes (1), qui contiennent respectivement une des deux recirculations de billes (2).

5. Ecrou pour système de direction (LM) selon la revendication 4, **caractérisé en ce que** la pièce partielle centrale (B) est fabriquée dans un premier matériau, qui peut supporter plus de charges mécaniques qu'un second matériau et **en ce que** les pièces partielles extérieures (A, C) sont fabriquées dans le second matériau.

6. Ecrou pour système de direction (LM) selon la revendication 5, **caractérisé en ce que** le premier matériau est fabriqué en métal, notamment en acier ou en un matériau coulé, et le second matériau est fabriqué en métal léger ou en plastique.

7. Ecrou pour système de direction (LM) selon l'une des revendications précédentes, **caractérisé en ce que** l'enveloppe est un tube, notamment un tube métallique (M).

8. Ecrou pour système de direction, **caractérisé en ce que** l'écrou pour système de direction est divisé axialement en deux pièces partielles de forme arquée (X, Y), qui renferment complètement l'enveloppe en forme de tube, moyennant quoi chacune (Y) des pièces partielles présente exactement une des deux recirculations de billes (2), de telle sorte que les recirculations de billes (2) soient disposées en décalage l'une contre l'autre dans la direction radiale sur un plan axial, notamment en décalage de 180° l'une contre l'autre.

9. Vis d'entraînement à billes, qui présente un arbre à vis sans fin, dans lequel un écrou pour système de direction (LM) s'engrène par l'intermédiaire des billes (9), moyennant quoi l'écrou pour système de direction (LM) comprend plusieurs douilles à billes (1) et est divisé en plusieurs pièces partielles (A, B, C) assemblables l'une à l'autre, **caractérisé en ce que**
l'écrou pour système de direction (LM) présente une enveloppe (M) en forme de tube, qui renferme complètement les pièces partielles (A, B, C) et **en ce que** des cavités pour des recirculations de billes (2) sont prévues dans les pièces partielles (A, B, C), de telle sorte que, à l'état assemblé des pièces partielles (A, B, C), l'écrou pour système de direction (LM) présente deux recirculations de billes (2), qui se trouvent respectivement à une extrémité axiale de l'écrou pour système de direction (LM) et sont disposées en décalage l'une contre l'autre dans la direction radiale.

10. Système de direction d'un véhicule comportant un écrou pour système de direction (LM) d'une vis d'entraînement à billes, laquelle présente un arbre à vis sans fin, dans lequel un écrou pour système de direction (LM) s'engrène par l'intermédiaire des billes (9), moyennant quoi l'écrou pour système de direction (LM) comprend plusieurs douilles à billes (1) et est divisé en plusieurs pièces partielles (A, B, C) assemblables l'une à l'autre, **caractérisé en ce que**
l'écrou pour système de direction (LM) présente une enveloppe (M) en forme de tube, qui renferme complètement les pièces partielles (A, B, C) et **en ce que** des cavités pour des recirculations de billes (2) sont prévues dans les pièces partielles (A, B, C), de telle sorte que, à l'état assemblé des pièces partielles (A, B, C), l'écrou pour système de direction (LM) présente deux recirculations de billes (2), qui se trouvent respectivement à une extrémité axiale de l'écrou pour système de direction (LM) et sont disposées en décalage l'une contre l'autre dans la direction radiale.
